(19) Europäisches Patentamt
European Patent Office
Office européen des brevets

(11) **EP 3 283 693 B1**

(12) **EUROPEAN PATENT SPECIFICATION**

(45) Date of publication and mention
of the grant of the patent:
**06.11.2019 Bulletin 2019/45**

(51) Int Cl.:
***E02D 13/06*** *(2006.01)*

(21) Application number: **15727027.3**

(22) Date of filing: **17.04.2015**

(86) International application number:
**PCT/FI2015/050269**

(87) International publication number:
**WO 2016/166406 (20.10.2016 Gazette 2016/42)**

(54) **A METHOD FOR PILE-DRIVING**

VERFAHREN ZUM SETZEN EINES PFAHLS

PROCÉDÉE D'INSTALLATION D' UN PIEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.02.2018 Bulletin 2018/08**

(73) Proprietor: **Junttan OY
70701 Kuopio (FI)**

(72) Inventors:
• **HALONEN, Antti
FI-70820 Kuopio (FI)**
• **HOLOPAINEN, Jyrki
FI-70910 Vuorela (FI)**
• **PAAVOLA, Jaakko
FI-73500 Juankoski (FI)**
• **PENTTINEN, Markku
FI-70820 Kuopio (FI)**

(74) Representative: **Berggren Oy, Tampere
Visiokatu 1
33720 Tampere (FI)**

(56) References cited:
WO-A1-2014/204308    GB-A- 2 175 033
JP-A- S58 135 225    NL-C2- 1 021 995

## Description

Field of the invention

The invention relates to a method for optimizing pile-driving.

Background of the invention

Conventionally, the impact energy of piles to be driven into ground by a pile-driving machine is adjusted by the driver of the pile-driving machine. This is done so that the driver of the machine follows the driving of the pile into the ground visually and/or watches measurement results produced by measuring devices monitoring the motion of the hammer ram, for example the progress of sinking (*i.e.* the advance) of the pile, or the load carrying capacity determined on the basis of it, and uses this to adjust the impact energy produced by the mass, i.e. block, moving inside the hammer ram (normally by adjusting the height of lifting the block). Normally, based on his experience, the driver tends to select an advance with which the total time taken for driving the pile into the ground would be as short as possible, wherein the total time taken for piling a given area or building can be minimized as well.

A drawback of the known method is the fact that using it, the pile can be driven using too much or too little impact energy (irrespective of the driver's experience). Using too much impact energy has the drawback that when the impact energy produced by the block is increased, the stroke frequency is normally reduced, because the greater impact energy will require a larger travel path (*i.e.* height for hoisting the block). As a result, in spite of the greater advance of the pile, the total time taken for driving the pile into the ground may be prolonged with respect to the velocity that could possibly be achieved with a slightly smaller impact energy. Using too much impact energy may, in the worst case, even cause breaking of the pile, because when the load carrying capacity is very small in relation to the impact energy, the shock wave effective on the end of the pile as a result of the impact will cause a tension on the pile, which tension may in such a case exceed the tensile strength of the pile. Using too little impact energy, in turn, has the drawback that the potential energy produced by the impact energy will not produce a sufficiently great force to exceed the load carrying capacity of the pile. As a result, the pile will not sink into the ground in the intended way, but the impact energy exerted on the pile is largely returned to the block. The drawbacks of the present method are particularly pronounced when the driver of the pile-driving machine is inexperienced.

A known method for optimizing the driving of a pile into the ground by a pile driving machine is described in the document NL 102 1 995 C and also WO 2014/204308 A1.

Brief summary of the invention

It is an aim of the invention to provide a novel method, by which the driving of the pile into the ground, for providing the desired load carrying capacity, can be performed faster and more securely than before in such a way that the pile is not damaged during the pile driving process.

The aim of the invention is achieved by the method according to the invention, because for adjusting the impact energy in the method, during each driving impact on the pile, a kinetic variable Q1 of the impact is measured by measuring devices in connection with the hammer ram during the impact, which variable is proportional to the kinetic energy of the block during the impact, and a kinetic variable Q3 of the return motion is measured during the return motion, which variable is proportional to the kinetic energy of the block during the return motion; on the basis of the kinetic variable ratio Q1/Q3 it is then possible to determine, how far the pile has advanced by the effect of each driving impact. Thus, by determining a kinetic variable ratio Q1/Q3 such that gives the shortest total pile driving time $t_{tot}$ and by controlling the kinetic energy of the impact on the basis of the same, each driving impact can be made optimal so that the advance produced by it will result in a total pile driving time $t_{tot}$ of the pile as short as possible, wherein the driving of the pile into the ground will always be performed as fast as possible.

In the present application, the kinetic variable ratio Q1/Q3 refers to the relationship Q1/Q3 between a variable Q1 that is proportional to the kinetic energy of the block during the impact and a variable Q3 that is proportional to the kinetic energy of the block during the corresponding return motion. The kinetic variable Q1 of the impact and the kinetic variable Q3 of the return motion, as well as the kinetic variable ratio Q1/Q3 determined by these can thus, in different applications of the invention, refer to, for example, the time taken for travelling a given distance, *i.e.* the impact time T1, and the time taken for travelling the same distance during the return motion of the block, *i.e.* the return motion time T3, determined in a corresponding way, as well as the motion time ratio T1/T3 determined by these; the impact velocity V1 and the return motion velocity V3 determined in a corresponding way; or the kinetic energy W1 of the impact and the kinetic energy W3 of the return motion, determined in a corresponding way, as well as the kinetic energy ratio W1/W3 determined by these. All of these will, in principle, give a ratio that produces the corresponding information which, in the present patent application, is called the kinetic variable ratio Q1/Q3. The kinetic variable ratio Q1/Q3 has been found to work well in evaluating the driving of the pile into the ground, because it indicates how large a relative proportion of the kinetic energy used for the impact is returned back to the block. If the proportion is very high (the kinetic variable ratio is high), it means that a large part of the impact energy is returned to the block and the impact has not caused sinking (advancing) of the pile into the ground. On the other hand, if the proportion is low (the kinetic variable ratio is low), it means that a large part of the impact energy has been consumed in sinking, i.e. advancing, of the pile. In order to provide an optimal pile driving process, the ratio should have a given value, because on the basis of the total time taken for driving one pile into the ground, it is easy to conclude that there is a given optimal value for the ratio (kinetic variable ratio), at which impacts can be produced, to drive the pile into the ground in the shortest possible time. In addition to the variables mentioned above, the kinetic variable ratio Q1/Q3 can also be formed by other variables proportional to the kinetic energies of the impact and the return motion (such variables could be *e.g.* the acceleration of the block in the direction of the impact motion and in the direction of the return motion, or the resultant of the forces effective on the block during the impact and the return motion).

The method according to the invention has the advantage that the driving of the pile into the ground by the pile-driving machine is always performed in the fastest possible way, even if the driver of the pile-driving machine were still inexperienced. Moreover, the method according to the invention reduces the risk of driving the pile using so much impact energy that the pile is damaged.

Description of the drawings

In the following, some advantageous embodiments of the invention will be described in more detail with reference to the appended drawings, in which

Fig. 1    is a principle view of a mechanism for moving the block of a pile-driving machine to be operated according to the method of the invention,

Fig. 2    is a principle view of different phases of the motions of the block during a single driving impact, and

Fig. 3    is a principle view showing times T1, T2, and T3 measured by position sensors S1 and S2 fastened to a hammer ram in the way shown in Fig. 1.

Detailed description of someadvantageous enbodiments of the invention

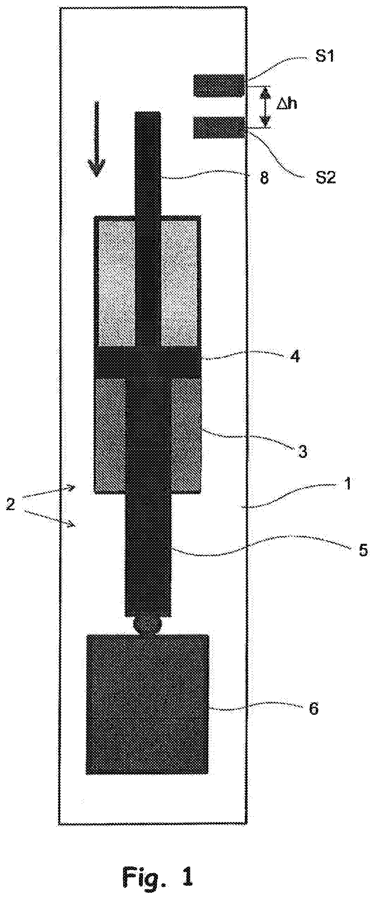

Figure 1 shows the operating principle of a mechanism 2 for moving a block 6 movable inside a hydraulically operated hammer ram 1 of a pile-driving machine. It comprises a hydraulic cylinder 3 extending in the longitudinal (vertical) direction of the hammer ram 1, and a piston 4 movable therein. A piston rod 5 extends from the piston 4 to the block 6 underneath the cylinder. Thus, when the piston 4 is moved back and forth inside the hydraulic cylinder 3 by pressurized medium supplied to different sides of the piston 4 in an alternating manner, the block 6 underneath the hydraulic cylinder 3 moves a corresponding distance in the vertical direction of the hammer ram 1. This reciprocating motion is utilized in driving a pile 7 by placing the hammer ram 1 on the pile 7 in such a way that when the block 6 comes to the lower position, it hits the top end of the pile 7. Normally, a cushioning is placed between the end of the pile 7 and the block 6, for suitably damping the impact caused by the block so that the pile will not be damaged by the impacts effective on it.

In the hammer ram 1 shown in Fig. 1, the travel distance of the piston 4 can be adjusted by adjusting the total quantity (volume) of pressurized medium to be supplied to its different sides during the motion. Normally, the piston 4 and the block 6 fastened to it and spaced by the length of the piston rod 5 will achieve the greater velocity, the greater the travel distance (stroke) of the piston 4 and thereby the block 6. However, the force by which the block is accelerated, in addition to the potential energy caused by its mass, will also influence the velocity achieved by the block. In this way, by adjusting the velocity of the piston 4 and thereby the height of lifting the block 6, as well as the pressure effective in the hydraulic cylinder, it is possible to change the velocity $v_1$ achieved by the block 6 and thereby the kinetic energy produced by the block, *i.e.* the so-called impact energy $W_{kin}$.

The impact energy $W_{kin}$ achieved by means of the downwards moving block can be calculated by the formula

$$W_{kin} = \frac{m_H v_1{}^2}{2} \qquad (1)$$

in which

$m_H$ = the mass of the block,
$v_1$ = the velocity of the block immediately before the impact.

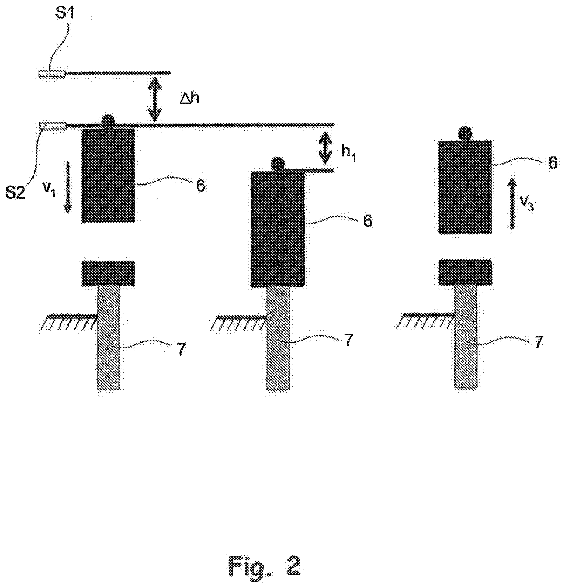

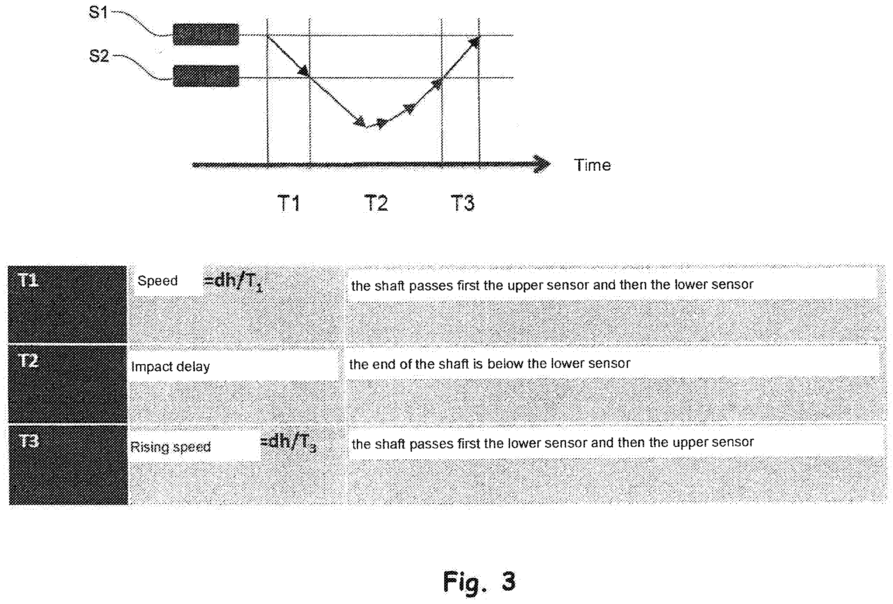

In the embodiment of Fig. 1, a measuring rod 8 extends upwards from the piston, the motion of the rod being monitored by an upper position sensor S1 and a lower position sensor S2 placed above the cylinder. The distance between the upper position sensor S1 and the lower position sensor S2 is $\Delta h$, as shown in Fig. 2. The position sensors S1 and S2 are connected to a control unit in the pile-driving machine, arranged to use the position sensors S1 and S2 for measuring the time T1 (impact time) taken by the measuring rod 8 when the end of the measuring rod 8 passes first the upper position sensor S1 and then the lower position sensor S2 as the piston moves downwards. Correspondingly, the time T2 (impact delay time) is the time taken by the measuring rod 8 when it is below the lower position sensor T2 during the impact, and the time T3 is the time (return motion time) taken by the measuring rod 8 when it has first passed the position sensor S2 and then the position sensor S1. The impact time T1, the impact delay time T2 and the return motion time T3 are shown in the principle view of Fig. 3. The distance $h_1$ is the travel distance passed by the measuring rod 8 after it has passed the lower position sensor S2 before the block 6 hits the end of the pile 7. The hammer ram can also be implemented in such a way that no measuring rod extends from the piston above the cylinder, but the motion of the piston and/or the block is monitored by measuring arrangements implemented in another way. For example, when position sensors are used, the position sensors may be arranged to measure the position of the block directly or further the position of another point connected to the block and moving with the block and/or with the piston.

On the basis of the impact time T1 and the return motion time T3, it is possible to determine the velocity V1 of the impact motion and the velocity V3 of the return motion, and correspondingly, on the basis of the velocity V1 of the impact motion and the velocity V3 of the return motion and the mass $m_H$ of the block, to determine the kinetic energy W1 of the impact and the kinetic energy W3 of the return motion. Thus, all the kinetic variables T1, V1 and W1 of the impact motion are proportional to the kinetic energy of the block during the impact (that is, they are kinetic variables Q1 of the impact motion in the sense of the present application), and all the kinetic variables T3, V3 and W3 of the return motion are proportional to the kinetic energy during the return motion (that is, they are kinetic variables Q3 of the return motion in the sense of the present application). The velocity V1 of the impact motion can be determined on the basis of the impact time T1 by dividing the distance $\Delta h$ by the impact time T1, and the return motion velocity V2 on the basis of the return motion time T3 by dividing the distance $\Delta h$ by the return motion time T3. If the velocity V1 is to correspond to the actual velocity $v_1$ right before the block hits the end of the pile, the velocity of the impact motion should be measured by measuring the instantaneous velocity $v_1$ right before the impact and the instantaneous velocity $v_3$ right after the impact. Another alternative is to determine the velocities $v_1$ and $v_3$ on the basis of the measured velocities V1 and V3, knowing that the velocity $v_1$ is proportional to the velocity V1 and the velocity $v_3$ is proportional to the velocity V3. For measuring the velocities, it is also possible to apply other measuring methods than measuring by the position sensors S1 and S2. The measurement can be taken, for example, by a sensor fastened to the side of the block and measuring the velocity of the block directly or the time (T1 and T3) taken for travelling a given distance $\Delta h$ during the impact and the return motion. Further, the velocity or time could be measured by using *e.g.* an optical positioning/speed measurement method, or an ultrasonic method of measurement.

The pile-driving machine including the hammer ram shown in Fig. 1 comprises a programmable control unit and a hydraulic system controlled by the control unit. By means of the hydraulic system controlled by the control unit, pressurized medium (*e.g.* hydraulic oil) can be supplied to the hydraulic cylinder in the hammer ram so that the piston 4 moving the block 6 can be moved a desired travel distance back and forth at a desired velocity within the hydraulic cylinder. Generally, the downwards motion of the block 6 is called the impact motion, and the upwards motion is called the return motion. The driver of the pile-driving machine can adjust the desired travel distance and/or velocity manually, or the adjustment can be made automatically so that the control unit selects the suitable travel distance, the final velocity of the impact motion and/or the force for accelerating the block (the pressure effective in the hydraulic cylinder) automatically on the basis of the desired impact energy $W_{kin}$ or further by means of software programmed/stored in the control unit. The position sensors S1 and S2 are connected to the control unit, whereby the control unit is capable of adjusting the velocity and/or travel distance of the piston on the basis of measurement data obtained from the position sensors S1 and S2.

In the hydraulically operated hammer ram 1, pressurized medium is supplied above the piston 4 during the work motion, and the pressurized medium below the piston is returned to a pressure medium tank in the system (that is, the falling of the block downwards is speeded up). Correspondingly, during the return motion, pressurized medium is supplied below the piston 4 and pressurized medium above the piston 4 is returned to the tank (that is, the block is lifted up). In this way, the block 6 can be moved back and forth inside the hammer ram 1 in the vertical direction of the hammer ram 1 during piling so that its velocity is higher during the work motion than during the return motion. Thus, the difference between the velocities is due to the fact that the change (reduction) in the potential energy caused by the mass $m_H$ of the block 6 carries out work which tends to increase the velocity of the block 6 as it moves downward, and correspondingly, the same change (increase) in the potential energy tends to slow down the motion of the block 6 as it moves upward.

In the time span T2 shown in Fig. 3, that is, during the so-calling impact delay, the pile 7 is subjected to not only the impact energy but also the change in potential energy formed by the downwards motion of the block 6 placed against the pile 7, and the pile 7 itself. A part of this motion downwards is caused by elastic deformation of the pile (normally, about 1/3 of the mass of the pile is involved in this part of the change in potential energy), and another part by sinking (*i.e.* advancing) of the pile into the ground. Thus, at this stage, the change in the potential energy carries out work for moving the pile 7 downwards, in addition to the impact energy $W_{kin}$, in the time span T2 shown in Fig. 3.

During the impact delay (*i.e.* in the time span T2 shown in Fig. 3), the total energy of the system formed by the pile and the block (when the pile is advancing) can be calculated by the formula:

$$W_{tot} = W_{kin} - W_{jou} + W_{pot\delta1} + W_{pot\delta2} \qquad (2)$$

in which

$W_{kin}$ = impact energy,
$W_{jou}$ = elastic energy to be bound in the pile,
$W_{pot\delta1}$ = change in potential energy, caused by elastic deformation of the pile,
$W_{pot\delta2}$ = change in potential energy, caused by advancing of the pile.

The elastic energy $W_{jou}$ to be bound in the pile 7 can be calculated by the formula:

$$W_{jou} = \frac{F\delta_1}{2} \qquad (3)$$

in which

F = the load carrying capacity of the pile,
$\delta1$ = the displacement (elastic deformation) of the top end of the pile,

The change in potential energy, caused by elastic deformation of the pile 7, can be calculated by the formula:

$$W_{pot\delta1} = (m_H + \frac{1}{3}m_P)g\delta_1 \qquad (4)$$

in which

$m_P$ = the mass of the pile,
g = the acceleration due to gravity.

The change in potential energy, caused by advancing of the pile 7, can be calculated by the formula:

$$W_{pot\delta2} = (m_H + m_P)g\delta_2 \qquad (5)$$

in which
$\delta_2$ = the advance of the pile.

When the block 6 and the pile 7 are abutting during the impact, part of the impact energy $W_{kin}$ and the potential energy $W_{pot\delta1}$ and $W_{pot\delta2}$ is always bound to the pile 7 itself in the form of elastic energy $W_{jou}$ to be stored in it, because the pile 7 will be elastically deformed. The rest is consumed in providing the advance $\delta_2$ of the pile 7 and in friction losses. If the impact energy $W_{kin}$ is too low, the total energy exerted on the pile is not capable of subjecting the pile 7 to a force that would make the pile 7 advance, because it is not capable of producing a force F sufficient to cause the pile 7 to advance, that is, a force corresponding to at least the load carrying capacity of the pile 7 at the time. In such a situation, most of the impact energy $W_{kin}$ and the potential energy (of which only $W_{pot\delta1}$ is included) is bound to the pile in the form of said elastic energy $W_{jou}$ (and the small remaining part will turn into heat in the form of friction losses). Thus, an impact with too little impact energy $W_{kin}$ cannot make the pile 7 advance, but most of the elastic energy $W_{jou}$ bound to the pile 7 will return to the block 6 which will pop up (that is, in the direction of the return motion) by the effect of this energy. Consequently, the elastic energy $W_{jou}$ bound to the pile 7 will turn back into kinetic energy and potential energy (which includes the rising up of the end of the pile as its elastic deformation will reverse, and an upwards motion of the block).

If the impact is so strong that the pile 7 will advance, part of the elastic energy $W_{jou}$ will have an effect on the advancing of the pile 7, and yet another part will return as kinetic energy to the block 6. In practice, this is shown, for example, in the times T1 and T3 measured by means of the position sensors S1 and S2 in such a way that in an impact that does not result in advancing of the pile 7, the time T3 is short in relation to the time T1. If, on the other hand, the pile 7 advances, a smaller part of the elastic energy bound to the pile 7 will be returned, by the effect of the impact, back to the block, as kinetic energy moving it upward. As a result, the time T3 will become longer in relation to the time T1. Utilizing this information, it is possible, on the basis of the times T1 and T3 measured by the position sensors S1 and S2, to determine how much the pile 7 will advance by the effect of each impact, and thereby to utilize the times T1 and T3 for evaluating the driving of the pile in the above described way.

As mentioned above, when piling in practice, the aim is to drive the pile 7 to a desired depth into the ground as fast as possible. For controlling this, the total time $t_{tot}$ taken for driving the pile 7 into the ground has to be determined. The total time $t_{tot}$ taken for driving the pile 7 into the ground is equal to the sum of times $t_i$ taken for each single impact. Consequently, the total time $t_{tot}$ taken for driving the pile 7 can be calculated by the formula:

$$t_{tot} = \sum_{i=1}^{n} t_i \qquad (6)$$

, in which

$t_{tot}$ = the total time taken for driving the pile,
$t_i$ = the time taken for a single impact,
n = the total number of impacts.

If the same time t is taken for each impact, the total time taken for driving the pile is equal to the number n of impacts needed, multiplied by the time taken for a single impact; that is:

$$t_{tot} = n \ast t \qquad (7)$$

In practice, this may be the case if the ground is such that the impact energy $W_{kin}$ can be adjusted to be constant. However, because the load carrying capacity of the pile 7 normally increases as the driving proceeds, applying a constant impact energy would result in a situation in which the pile 7 would be driven initially using excessive impact energy and in the end using too little impact energy.

In order to drive the pile 7 into the ground as fast as possible, the aim is to minimize the total time $t_{tot}$ taken for driving the pile. Naturally, the total time $t_{tot}$ reaches a minimum when the sum of the times taken for the single impacts is as small as possible. If the impact energy $W_{kin}$ is not constant, there are several alternative solutions to this, because the durations $t_i$ of the single impacts can be different with two different ways of driving the pile into the ground, even if the final result is the same total time $t_{tot}$ taken for driving the pile 7.

A framework condition for driving the pile 7 (intact) into the ground altogether is that the impact energy $W_{kin}$ should exceed a value that produces a greater force effective on the pile 7 in the direction of the ground than the load carrying capacity F of the pile 7 and is, on the other hand, smaller than a value that causes such a strong tension impulse on the pile 7 that the pile will be damaged. When driving piles into normal ground to be piled, no pile will, for example, generally sustain being driven into the ground by a single impact. Moreover, such an impact would require so much impact energy that with a typical block weight to pile weight ratio (for example, $m_H/m_P = 1.69$) it would lead to such a long impact that the total time $t_{tot}$ would be considerably longer than when implemented by several impacts with optimal impact energy. Naturally, such a pile-driving machine would not be viable in practice either.

Thus, an optimal way of pile driving, resulting in the shortest possible total time $t_{tot}$, is always somewhere between these two extreme cases.

In tests carried out with pile-driving machines similar to those shown in Fig. 1, it has been found that with a certain ratio between the time T1 measured in connection with the impact and the time T3 measured during the return motion (that is, with a given motion time ratio T1/T3 in this application), it is possible to achieve the shortest possible total time $t_{tot}$ taken for driving the pile into the ground. Thus, by determining this target (optimal) motion time ratio $T1/T3_{tav}$, it is possible to optimize the driving of the pile 7 into the ground in such a way that the pile 7 can be driven into the ground as fast as possible. The determining can be done experimentally and/or by calculating, knowing the ratio of the times T1, T2 and T3 to the real velocity of the block 6 and thereby to the impact energy obtained. In principle, instead of the impact time T1 and the return motion time T3, it would also be possible to use the velocities corresponding to the times T1 and T3, that is, the impact velocity V1 and the return motion velocity V3 and the velocity ratio V1/V3 formed thereby, for determining the corresponding ratio. Further, the same ratio would be achieved by determining, from the impact velocity V1, the kinetic energy W1 of the impact (which is thus proportional to the impact energy $W_{kin}$) and the kinetic energy W3 of the return motion and, on the basis of these, the defined kinetic energy ratio W1/W3.

For achieving an optimal pile driving process, the aim should be to adjust the impact energy $W_{kin}$ so that the selected kinetic variable ratio Q1/Q3, for example the motion time ratio T1/T3, the velocity ratio V1/V3 or the kinetic energy ratio W1/W3, would be as close as possible to the target value of these during the whole pile driving process. In the embodiment of Fig. 1 (in which motion times T1, T2, T3 are measured), the target value is the target motion time ratio $T1/T3_{tav}$. As a result, in a pile-driving machine according to Fig. 1, the impact energy $W_{kin}$ of the next impact is always adjusted on the basis of the actual (measured) motion time ratio T1/T3 of the preceding impact. This can be done, for example, by comparing the measured motion time ratio T1/T3 with the target value $T1/T3_{tav}$ for the motion time ratio, wherein the pile 7 can be driven into the ground as fast as possible. Such an adjustment of the impact energy $W_{kin}$ can be implemented by means of software in the control unit of the pile-driving machine. This can be arranged, for example, in such a way that the driver of the pile-driving machine selects "automatically optimized pile driving process" from the menu of the control unit, and enters data on the pile to be driven into the ground and on the soil quality/type. Thus, the control unit will find out the target value $T1/T3_{tav}$ for the motion time ratio that is the most suitable for the pile type and the soil type in question, whereby the pile driving process of said pile is implemented in an optimal way. Thus, a corresponding process of optimizing the pile-driving could also be based on kinetic variable ratios Q1/Q3 formed by means of other kinetic variables Q1 of the impact and kinetic variables Q3 of the return motion (where the kinetic variable of the impact should be proportional to the kinetic energy of the block during the impact, and the kinetic variable Q3 of the return motion should be proportional to the kinetic energy of the block during the return motion), and their target value $Q1/Q3_{tav}$, such as the velocity ratio V1/V3 and its target value $V1/V3_{tav}$, or the kinetic energy ratio W1/W3 and its target value $W1/W3_{tav}$.

In the case of the measuring arrangement shown in Fig. 1, the control unit of the pile-driving machine, to which the position sensors S1 and S2 are connected, determines values of the motion time ratio T1/T3 from the motion times T1 and T3 during the pile driving process, and compares them with the target value $T1/T3_{tav}$. If the motion time ratio T1/T3 of the preceding impact is lower than the target value $T1/T3_{tav}$, the control unit will increase the impact energy, and if it is higher, the control unit will decrease the impact energy. This control is automatic so that the real motion time ratio T1/T3 determined on the basis of the motion times T1 and T3 is continuously changed towards the motion time ratio $T1/T3_{tav}$ that is known to result in a minimum total time $t_{tot}$ for driving the pile 7. In practice, however, the load carrying capacity of the pile 7 is changed all the time, so that the continuous control will take care that the pile 7 is driven in an optimal way even if the theoretical optimum situation were not achieved. A way of operation corresponding to this could also be equally well implemented by means of other kinetic variable ratios Q1/Q3, such as the velocity ratio V1/V3 or the kinetic energy ratio W1/W3.

Alternatively, the automatic control in the control unit of the pile-driving machine could be implemented in such a way that from the kinetic variable ratio Q1/Q3 measured after each impact, such as from the motion time ratio T1/T3, the velocity ratio V1/V3 or the kinetic energy ratio W1/W3, and their target values $T1/T3_{tav}$, $V1/V3_{tav}$, $W1/W3_{tav}$, the deviation in the motion time ratio $\Delta T1/T3$, the deviation in the velocity ratio $\Delta V1/V3$, or the deviation in the kinetic energy $\Delta W1/W3$ is calculated by subtracting the measured value from the respective target value. The control unit will then attempt to correct the impact energy so that in the next impact, the deviation from the target value would be as small as possible.

The most suitable target kinetic variable ratio $Q1/Q3_{tav}$, such as the target motion time ratio $T1/T3_{tav}$, the target velocity ratio $V1/V3_{tav}$, or the target kinetic energy ratio $W1/W3_{tav}$ can be determined for each pile as well as for each different soil type. It is also possible to use target values producing different advancing profiles. These, too, can be different for different piles and soil types. In some cases, the target kinetic variable ratio $Q1/Q3_{tav}$, such as, for example, the target motion time ratio $T1/T3_{tav}$, the target velocity ratio $V1/V3_{tav}$ or the target kinetic energy ratio $W1/W3_{tav}$ can vary in different ways during the pile driving process.

The location of the position sensors S1 and S2 or other sensors used for measuring the motion of the block in relation to the location of the block moving in the hammer ram can vary in different embodiments of the method according to the invention. For example, in the embodiment of Figs. 1 to 3, the ratio of the times T1, T2 and T3 to the actual velocity of the block 6 can vary in different embodiments. The motion time ratio T1/T3 is a ratio indicating the ratio of times taken for the movement of the block in a defined distance $\Delta h$ during the impact and the return motion. Thus, the value of the motion time ratio depends on the advance of the pile during one impact. As mentioned above, it should not be limited to the ratio of motion times only, because the same information (ratio) utilized in the method according to the invention can also be obtained by examining other variables proportional to the kinetic energies of the impact and the return motion, such as the ratios between the velocities or the kinetic energies of the impact and the return motion. These variables can be measured by applying a variety of measuring arrangements deviating from the above-presented example embodiment. In principle, it is possible to apply, for example, any measuring device for measuring the momentary or average velocity of the block, or a measuring device for measuring another suitable variable proportional to the kinetic energy, providing measurement results which can be used for determining a ratio proportional to the kinetic energies of the impact and the return motion, and for estimating the advance provided by a single impact on the pile in relation to impacts providing the shortest possible total impact time, and, on the basis of this, for adjusting the impact energy $W_{kin}$ to provide an optimal pile driving process.

The method according to the invention is not limited to the above described example embodiments but it can be implemented in different ways within the scope of the appended claims.

**Claims**

1. A method for optimizing the driving of a pile (7), the method comprising:

   - driving the pile (7) into the ground by a pile-driving machine comprising a hammer ram (1) to be placed against the pile (7) and a block (6) that is movable back and forth therein;
   - moving the block (6) applied for driving the pile (7) towards the end of the pile (7) with a given impact energy ($W_{kin}$); the method being **characterized by** the following steps:

     - determining the value of a kinetic variable (Q1) of the impact, proportional to the kinetic energy of the block (6) used for driving the pile, when the block (6) is moving towards the pile (7) in the pile driving direction;
     - determining the value of a kinetic variable (Q3) of the return motion, proportional to the kinetic energy of the block (6), when the block (6) is returning, after an impact on the pile (7), in a direction opposite to the pile driving direction;
     - calculating a kinetic variable ratio (Q1/Q3) by means of the determined kinetic variable (Q1) of the impact and kinetic variable (Q3) the return motion;
     - comparing the obtained kinetic variable ratio (Q1/Q3) with a predetermined target value ($Q1/Q3_{tav}$) for the kinetic variable ratio (Q1/Q3), producing the shortest possible total pile driving time ($t_{tot}$) for the pile (7);
     - adjusting the impact energy ($W_{kin}$) of the next impact in such a way that the kinetic variable ratio (Q1/Q3) determined by the kinetic variable (Q1) of the impact and the kinetic variable (Q3) of the return motion of the next impact will be changed towards the target value ($Q1/Q3_{tav}$).

2. The method according to claim 1, wherein the impact energy ($W_{kin}$) of the next impact is determined by utilizing the impact energy ($W_{kin}$) used in the preceding impacts and the real kinetic variable ratio (Q1/Q3) obtained by it.

3. The method according to claim 2, wherein the value of the impact energy ($W_{kin}$) is increased if the real impact variable ratio (Q1/Q3) of the preceding impact is higher than the target impact variable ratio ($Q1/Q3_{tav}$).

4. The method according to claim 2 or 3, wherein the value of the impact energy ($W_{kin}$) is decreased if the real impact variable ratio (Q1/Q3) of the preceding impact is lower than the target impact variable ratio ($Q1/Q3_{tav}$).

5. The method according to claim 1, wherein the difference of the kinetic variable ratios, i.e. the deviation ($\Delta$ Q1/Q3) in the kinetic variable ratio, is calculated from the kinetic variable ratio (Q1/Q3) and the target kinetic variable ratio ($Q1/Q3_{tav}$).

6. The method according to claim 5, wherein the deviation in the kinetic variable ratio ($\Delta$Q1/Q3) is minimized by adjusting the impact energy ($W_{kin}$) of the block (6).

7. The method according to any of the claims 1 to 6, wherein before starting the pile driving process, the target variable ratio ($Q1/Q3_{tav}$) is determined by calculating on the basis of the cross-sectional area, length, and type of the pile, and/or the soil properties, by optimizing the impact energy ($W_{kin}$) so that by impacts producing an equal advance, the pile (7) can be driven to the determined depth in a time ($t_{tot}$) as short as possible.

8. The method according to any of the claims 1 to 6, wherein the target kinetic variable ratio ($Q1/Q3_{tav}$) is determined so that by impacts producing different advances, the pile (7) can be driven to the determined depth in a time ($t_{tot}$) as short as possible.

9. The method according to any of the claims 1 to 8, using the impact time (T1) as the kinetic variable (Q1) of the impact motion and the return motion time (T3) as the kinetic variable (Q3) of the return motion, as well as the motion time ratio (T1/T3) determined on the basis of these.

10. The method according to any of the claims 1 to 8, using the impact velocity (V1) as the kinetic variable (Q1) of the impact motion and the return motion velocity (V3) as the kinetic variable (Q3) of the return motion, as well as the velocity ratio (V1/V3) determined on the basis of these.

11. The method according to any of the claims 1 to 8, using the kinetic energy (W1) of the impact motion as the kinetic variable (Q1) of the impact motion and the kinetic energy (V3) of the return motion as the kinetic variable (Q3) of the return motion, as well as the velocity ratio (V1/V3) determined on the basis of these.

**Patentansprüche**

1. Ein Verfahren zum Optimieren des Rammens eines Pfahls (7), wobei das Verfahren Folgendes umfasst:

   - Rammen des Pfahls (7) in den Boden mittels einer Pfahlramm-Maschine, aufweisend einen Hammerbär (1), der am Pfahl (7) platziert wird, und einen Block (8), der darin hin und her beweglich ist;
   - Bewegen des Blocks (6), der angebracht ist, um den Pfahl (7) mit einer vorgegebenen Aufprallenergie ($W_{kin}$) in Richtung des Endes des Pfahls (7) zu rammen;

   wobei das Verfahren durch die folgenden Schritte gekennzeichnet ist:

   - Bestimmen des Werts einer kinetischen Variablen (Q1) des Aufpralls, proportional zur kinetischen Energie des Blocks (6), die zum Rammen des Pfahls verwendet wird, wenn sich der Block (6) zum Pfahl hin (7) in der Pfahlrammrichtung bewegt;
   - Bestimmen des Wertes einer kinetischen Variablen (Q3) der Rückkehrbewegung, proportional zur kinetischen Energie des Blocks (6), wenn der Block (6) nach einem Aufprall auf den Pfahl (7) in eine Richtung entgegengesetzt zur Pfahlrammrichtung zurückkehrt;
   - Berechnen eines kinetischen Variablenverhältnisses (Q1/Q3) mittels der bestimmten kinetischen Variablen (Q1) des Aufpralls und der kinetischen Variablen (Q3) der Rückkehrbewegung;
   - Vergleichen des erhaltenen kinetischen Variablenverhältnisses (Q1/Q3) mit einem vorgegebenen Sollwert ($Q1/Q3_{tav}$) für das kinetische Variablenverhältnis (Q1/Q3), wobei die kürzest mögliche Gesamt-Pfahlrammzeit ($t_{tot}$) für den Pfahl (7) erzeugt wird;
   - Einstellen der Aufprallenergie ($W_{kin}$) des nächsten Aufpralls derart, dass das kinetische Variablenverhältnis (Q1/Q3), das durch die kinetische Variable (Q1) des Aufpralls und die kinetische Variable (Q3) der Rückkehrbewegung des nächsten Aufpralls bestimmt ist, in Richtung des Sollwerts ($Q1/Q3_{tav}$) abgeändert wird.

2. Verfahren gemäß Anspruch 1, wobei die Aufprallenergie ($W_{kin}$) des nächsten Aufpralls bestimmt wird, indem die bei den vorhergehenden Aufprallereignissen eingesetzte Aufprallenergie ($W_{kin}$) und das daraus resultierende tatsächliche kinetische Variablenverhältnis (Q1/Q3) verwendet werden.

3. Verfahren gemäß Anspruch 2, wobei der Wert der Aufprallenergie ($W_{kin}$) erhöht wird, falls das tatsächliche Aufprall-Variablenverhältnis (Q1/Q3) des vorhergehenden Aufpralls höher ist als das Soll-Aufprall-Variablenverhältnis ($Q1/Q3_{tav}$).

4. Verfahren gemäß Anspruch 2 oder 3, wobei der Wert der Aufprallenergie ($W_{kin}$) verringert wird, falls das tatsächliche Aufprall-Variablenverhältnis (Q1/Q3) des vorhergehenden Aufpralls geringer als das Soll-Aufprall-Variablenverhältnis (Q1/Q3tav) ist.

5. Verfahren gemäß Anspruch 1, wobei die Differenz der kinetischen Variablenverhältnisse, d. h. die Abweichung ($\Delta$ Q1/Q3) im kinetischen Variablenverhältnis, aus dem kinetischen Variablenverhältnis (Q1/Q3) und dem kinetischen Soll-Variablenverhältnis ($Q1/Q3_{tav}$) berechnet wird.

6. Verfahren gemäß Anspruch 5, wobei die Abweichung im kinetischen Variablenverhältnis ($\Delta$Q1/Q3) durch Einstellen der Aufprallenergie ($W_{kin}$) des Blocks (6) minimiert wird.

7. Verfahren gemäß einem der Ansprüche 1 bis 6, wobei vor Beginn des Pfahlrammvorgangs das Soll-Variablenverhältnis ($Q1/Q3_{tav}$) durch Berechnen auf der Basis der Querschnittfläche, der Länge und der Art des Pfahls und/oder der Bodeneigenschaften bestimmt wird, indem die Aufprallenergie ($W_{kin}$) derart optimiert wird, dass durch Aufprallereignisse, die einen gleichen Vortrieb erzeugen, der Pfahl (7) in möglichst kurzer Zeit ($t_{tot}$) in die bestimmte Tiefe gerammt werden kann.

8. Verfahren gemäß einem der Ansprüche 1 bis 6, wobei das kinetische Soll-Variablenverhältnis ($Q1/Q3_{tav}$) so bestimmt wird, dass durch Aufprallereignisse, die unterschiedliche Vortriebe erzeugen, der Pfahl (7) in möglichst kurzer Zeit ($t_{tot}$) in die bestimmte Tiefe gerammt werden kann.

9. Verfahren gemäß einem der Ansprüche 1 bis 8, wobei die Aufprallzeit (T1) als die kinetische Variable (Q1) der Aufprallbewegung und die Rückkehrbewegungszeit (T3) als die kinetische Variable (Q3) der Rückkehrbewegung sowie das auf der Basis von diesen bestimmte Bewegungszeitverhältnis (T1/T3) verwendet werden.

10. Verfahren gemäß einem der Ansprüche 1 bis 8, wobei die Aufprallgeschwindigkeit (V1) als die kinetische Variable (Q1) der Aufprallbewegung und die Rückkehrbewegungsgeschwindigkeit (V3) als die kinetische Variable (Q3) der Rückkehrbewegung sowie das auf der Basis von diesen bestimmte Geschwindigkeitsverhältnis (V1/V3) verwendet werden.

11. Verfahren gemäß einem der Ansprüche 1 bis 8, wobei die kinetische Energie (W1) der Aufprallbewegung als die kinetische Variable (Q1) der Aufprallbewegung und die kinetische Energie (V3) der Rückkehrbewegung als die kinetische Variable (Q3) der Rückkehrbewegung sowie das auf der Basis von diesen bestimmte Geschwindigkeitsverhältnis (V1/V3) verwendet werden.

## Revendications

1. Procédé permettant d'optimiser l'entraînement d'un poteau (7), le procédé comprenant :

   - l'entraînement d'un poteau (7) dans le sol par une machine de battage de pieux comprenant un marteau-pilon (1) à placer contre le poteau (7) et un bloc (6) qui est mobile en avant et en arrière à l'intérieur ;
   - le déplacement du bloc (6) appliqué afin d'entraîner le poteau (7) vers l'extrémité du poteau (7) avec une énergie d'impact donnée ($W_{kin}$) ;

   le procédé étant **caractérisé par** les étapes suivantes :

   - la détermination de la valeur d'une variable cinétique (Q1) de l'impact, proportionnelle à l'énergie cinétique du bloc (6) utilisé afin d'entraîner le poteau, lorsque le bloc (6) se déplace vers le poteau (7) dans la direction d'entraînement du poteau ;
   - la détermination de la valeur d'une variable cinétique (Q3) du mouvement de retour, proportionnelle à l'énergie cinétique du bloc (6), lorsque le bloc (6) revient, après un impact sur le poteau (7), dans une direction opposée à la direction d'entraînement du poteau ;
   - le calcul d'un rapport variable cinétique (Q1/Q3) au moyen de la variable cinétique déterminée (Q1) de l'impact et de la variable cinétique (Q3) du mouvement de retour ;
   - la comparaison du rapport variable cinétique obtenu (Q1/Q3) avec une valeur cible prédéterminée ($Q1/Q3_{tav}$) pour le rapport variable cinétique (Q1/Q3), en produisant le temps d'entraînement de poteau total le plus court possible ($t_{tot}$) pour le poteau (7) ;
   - l'ajustement de l'énergie d'impact ($W_{kin}$) du prochain impact de telle sorte que le rapport variable cinétique (Q1/Q3) déterminé par la variable cinétique (Q1) de l'impact et la variable cinétique (Q3) du mouvement de retour du prochain impact sera modifié afin de se diriger vers la valeur cible ($Q1/Q3_{tav}$).

2. Procédé selon la revendication 1, dans lequel l'énergie d'impact ($W_{kin}$) du prochain impact est déterminée en utilisant l'énergie d'impact ($W_{kin}$) utilisée dans les précédents impacts et le rapport variable cinétique réel (Q1/Q3) obtenu à partir de celle-ci.

3. Procédé selon la revendication 2, dans lequel la valeur de l'énergie d'impact ($W_{kin}$) est accrue si le rapport variable d'impact réel (Q1/Q3) de l'impact précédent est supérieur au rapport variable d'impact cible ($Q1/Q3_{tav}$).

4. Procédé selon la revendication 2 ou 3, dans lequel la valeur de l'énergie d'impact ($W_{kin}$) est réduite si le rapport variable d'impact réel (Q1/Q3) de l'impact précédent est inférieur au rapport variable d'impact cible ($Q1/Q3_{tav}$).

**5.** Procédé selon la revendication 1, dans lequel la différence des rapports variables cinétiques, à savoir l'écart ($\Delta$ Q1/Q3) dans le rapport variable cinétique, est calculée à partir du rapport variable cinétique (Q1/Q3) et du rapport variable d'impact cible (Q1/Q3$_{tav}$).

**6.** Procédé selon la revendication 5, dans lequel l'écart dans le rapport variable cinétique ($\Delta$ Q1/Q3) est minimisé en ajustant l'énergie d'impact (W$_{kin}$) du bloc (6).

**7.** Procédé selon l'une quelconque des revendications 1 à 6, dans lequel avant de démarrer le processus d'entraînement de poteau, le rapport variable cible (Q1/Q3$_{tav}$) est déterminé en calculant sur la base de la superficie transversale, de la longueur et du type de poteau, et/ou des propriétés du sol, en optimisant l'énergie d'impact (W$_{kin}$) de sorte que, par des impacts produisant une avancée égale, le poteau (7) puisse être entraîné à une profondeur déterminée en un temps (t$_{tot}$) le plus court possible.

**8.** Procédé selon l'une quelconque des revendications 1 à 6, dans lequel le rapport variable d'impact cible (Q1/Q3$_{tav}$) est déterminé de sorte que par des impacts produisant différentes avancées, le poteau (7) puisse être entraîné à une profondeur déterminée en un temps (t$_{tot}$) le plus court possible.

**9.** Procédé selon l'une quelconque des revendications 1 à 8, en utilisant le temps d'impact (T1) comme variable cinétique (Q1) du mouvement d'impact et le temps de mouvement de retour (T3) comme variable cinétique (Q3) du mouvement de retour, ainsi que le rapport de temps de mouvement (T1/T3) déterminé sur la base de ceux-ci.

**10.** Procédé selon l'une quelconque des revendications 1 à 8, utilisant la vitesse d'impact (V1) comme variable cinétique (Q1) du mouvement d'impact et la vitesse de mouvement de retour (V3) comme variable cinétique (Q3) du mouvement de retour, ainsi que le rapport de vitesse (V1/V3) déterminé sur la base de celles-ci.

**11.** Procédé selon l'une quelconque des revendications 1 à 8, utilisant l'énergie cinétique (W1) du mouvement d'impact comme variable cinétique (Q1) du mouvement d'impact et l'énergie cinétique (V3) du mouvement de retour comme variable cinétique (Q3) du mouvement de retour, ainsi que le rapport de vitesse (V1/V3) déterminé sur la base de celles-ci.

**Fig. 1**

Fig. 2

| | | |
|---|---|---|
| **T1** | Speed $=dh/T_1$ | the shaft passes first the upper sensor and then the lower sensor |
| **T2** | Impact delay | the end of the shaft is below the lower sensor |
| **T3** | Rising speed $=dh/T_3$ | the shaft passes first the lower sensor and then the upper sensor |

**Fig. 3**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- NL 1021995 C
- WO 2014204308 A1